# EUROPEAN PATENT SPECIFICATION

(11) **EP 0 454 418 B1**
(45) Date of publication and mention of the grant of the patent: **23.03.1994**
(21) Application number: 91303646.3
(22) Date of filing: 23.04.1991
(51) Int. Cl.: A21C 1/14, A21C 3/02, A21D 8/02

(54) **A method and apparatus for producing a sheet of dough**
Verfahren und Vorrichtung zur Herstellung eines Teigblattes
Procédé et appareil par la production d'une feuille de pâte

(30) Priority: 23.04.1990 JP 107061/90
(43) Date of publication of application: 30.10.1991
(73) Proprietor: RHEON AUTOMATIC MACHINERY CO. LTD., Utsunomiya-shi Tochigi-ken (JP)
(72) Inventor: Kageyama, Minoru, Utsunomiya-shi, Tochigi-ken (JP); Torikata, Yasuo, Utsunomiya-shi, Tochigi-ken (JP)
(74) Representative: Leale, Robin George

(56) References cited:
- EP-A- 0 311 240
- WO-A-90/09840
- GB-A- 1 089 090
- JP-A- 6 312 242
- US-A- 3 375 117
- US-A- 3 928 646

## Description

This invention relates to a method and apparatus for producing a sheet of dough. It especially relates to a method and apparatus for producing a sheet of dough from a dough mixture that consists of powdered materials, including flour and ice.

Many attempts have been made to instantly provide dough of a good quality whenever it is needed. In the prior art methods raw materials are mixed with water and kneaded to form a lump of dough. The lump of dough is extruded from an extruder, and then sheeted, cut, shaped and fermented to produce dough products.

However, these prior art methods have several problems. Namely, the mixing and kneading process needs operators' skills in judging whether the materials are uniformly mixed with water and whether the gluten in the kneaded dough is sufficiently developed. It has been generally said that the constant production of a uniform mixture of powder and liquid within a limited period of time is difficult. The amount of water for making dough is usually less than that of powdery materials so that the powdery materials tend to gather to form a hard mass. In order to prevent that happening, a long period of time for kneading is required. Once dough is kneaded, fermentation starts progressing in the dough due to the yeast contained in it. This fermentation cannot be stopped until the dough is completely baked or is frozen. Therefore, the discontinuation of fermentation before such processes means scrapping the dough. Further, in the above-mentioned kneading process, the network of the tissue structure of a well-developed gluten is liable to be destroyed due to the squeezing force exerted on the dough by the extruder. Hence an extra process, such as a resting process, is needed to recover the lost tissue structure.

In the English abstract of JP-A-6,312,242, the preparation of a food dough is disclosed, whereby food materials comprising powder (eg. flour) and crushed pieces (eg. pieces of ice, solidified milk etc.) are combined to form a uniform mixture, to which solidified pieces (eg. frozen jam, frozen egg yolk and white, magarine etc.) are added.

Viewed from one aspect the present invention provides a method of producing a sheet of dough, comprising the steps of:
mixing powdered materials, suitable for making dough, with particles of ice, such that the particles of ice do not melt, to make a dough mixture;
forming the dough mixture into a continuous belt-like dough mixture having a substantially uniform width and thickness such that the particles of ice still do not melt;
melting the said particles of ice to make the belt-like dough mixture hydrated; and
stretching the continuous hydrated belt-like dough mixture to thereby make a continuous sheet of dough and to generate a gluten network in the dough sheet.

Viewed from another aspect the invention provides apparatus for producing a sheet of dough, comprising:
mixing means for mixing powdered materials, suitable for making dough, with particles of ice, to make a dough mixture;
forming means for forming said dough mixture into a continuous belt-like dough mixture;
a freezing chamber for holding the said mixing means and forming means in an environment such that the particles of ice do not melt;
a melting chamber for melting the particles of ice, disposed adjacent and downstream of the said freezing chamber; and
a dough stretcher disposed downstream of the melting chamber.

In the method of this invention, by keeping the ice frozen and by thus preventing the dough from being hydrated, the dough mixture is kept in a powdered state until it is formed into a belt-like dough mixture.
Thus, since the mixing process is carried out on all of the particles, namely the powdered materials and the particles of ice, they can be uniformly mixed with each other. Therefore, when the particles of ice in the belt-like dough mixture are melted, a uniformly hydrated belt-like dough mixture is obtained, in which all the ingredients, including for example flour, yeast, sugar, and fats and oils, are uniformly dispersed.

The hydrated belt-like dough mixture is then stretched by exerting a shearing stress on the dough mixture to make a sheet of dough and so as to generate a gluten tissue structure in the dough sheet. The dough sheet thus prepared has a well-developed gluten for producing products of a high quality.

The dough mixture in the mixing and forming means can be left in the freezing chamber until it is required. The thus preserved dough mixture can then be used at any time in response to need, for feeding dough into an apparatus for making bread for example. It can also be supplied for consumers' home use.

Some embodiments of the invention will now be described by way of example and with reference to the accompanying drawings, in which:-
Fig. 1 is a schematic side view, partly in section, of a first embodiment of apparatus according to this invention, illustrating the sequence of steps for producing a sheet of dough according to a first embodiment of the method of this invention;
Fig. 2 is a schematic perspective view of a hopper and forming belt conveyor, forming a part of the apparatus of Fig. 1;
Fig. 3 is a schematic side view, partly in section, of a second embodiment of apparatus according to the invention, illustrating the sequence of steps for producing a sheet of dough according to a second embodiment of the method of the invention; and
Fig. 4 is a schematic side view, partly in section, of a third embodiment of apparatus according to invention, illustrating the sequence of steps for producing a sheet of dough according to a third embodiment of the method of invention.

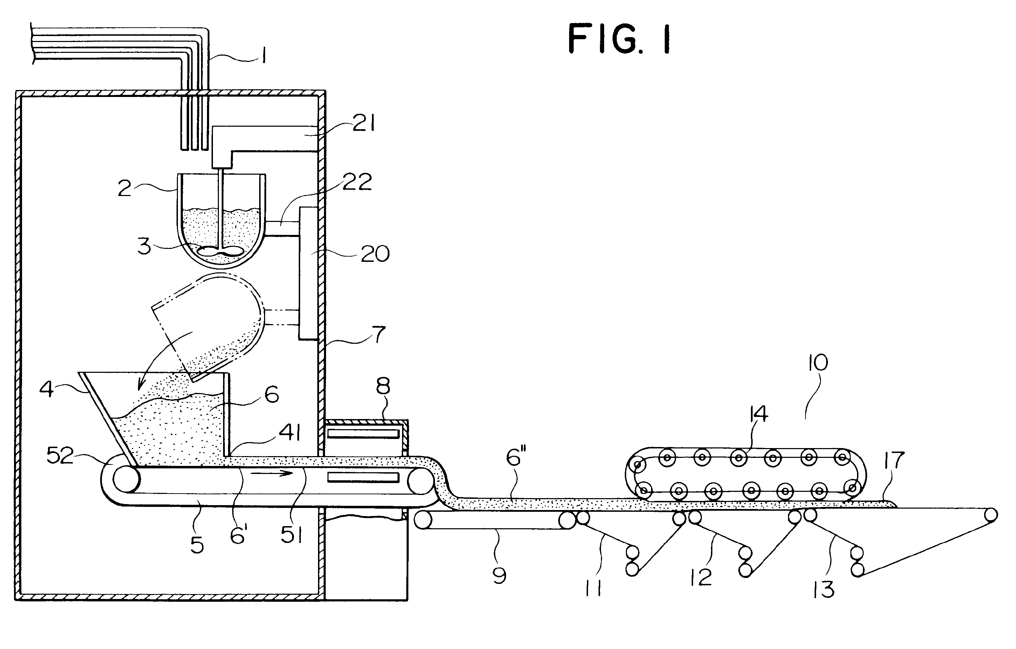

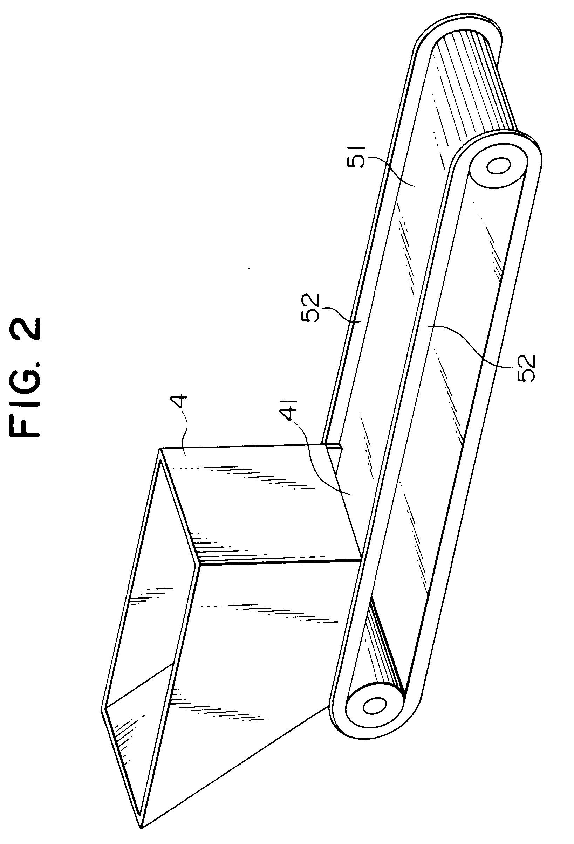

The apparatus of a first embodiment of the invention will first be described by reference to Figs. 1 and 2.

The apparatus comprises a freezing chamber 7, a melting chamber 8, a forming conveyor 5, a transfer conveyor 9, and stretching means 10. In the freezing chamber 7 a mixing bowl 2, a hopper 4, and part of the forming conveyor 5 are provided. Passages 1, for feeding powdered dough materials and ice into the mixing bowl 2, are provided at the top of the freezing chamber 7. A pair of mixing blades 3 is provided on the end of a shaft extending downwardly into the mixing bowl 2. The shaft and the bowl 2 are pivoted on brackets 21 and 22, respectively. The bracket 21 is mounted to the inner wall of the freezing chamber 7. The bracket 22 is mounted to an elevating means 20 which is fixed to the inner wall of the freezing chamber 7 so that the mixing bowl 2 can be moved up and down and turned over at desired angles, as illustrated by the broken lines in the Figure.

The hopper 4 is provided below the mixing bowl 2 for receiving mixed materials, namely a dough mixture 6. The forming conveyor 5 runs under the bottom of the hopper 4 and comprises a conveying belt 51 running around two end rolls, one of which is driven by a motor (not shown) and flexible walls 52 projecting perpendicularly from each of the longitudinal edges of the conveying belt 51. The flexible walls 52 can be made of rubber, or of a number of metal plates abutting end-to-end, so that the walls can move around the ends of the conveyor 52. The hopper 4 engages the upstream end of the conveyor 5, as shown in Fig. 2.

An outlet 41 for discharging the dough mixture 6 is provided at the bottom of the hopper 4. In the freezing chamber 7 a subzero environment, preferably below -10°C, is maintained so that the powdered materials and the mixed dough mixture 6 are processed and kept in a powdery state. An opening is provided in the front wall of the freezing chamber 7 to enable the formed dough mixture 6' to be transferred out of the chamber. Adjacent the said opening, on the outside of the freezing chamber 7, is provided a melting chamber 8. The temperature in the melting chamber 8 is maintained substantially above the freezing point. There are two methods of melting the particles of ice contained in the formed belt-like dough mixture 6', one forcible and one natural. In this embodiment a forcible method, such as the direct application of a hot gas, or microwave energy, to the formed dough mixture 6', is used. The melting chamber 8 receives the dough mixture from the above-mentioned opening in the freezing chamber 7, and another opening is provided in the front wall of the melting chamber. The forming conveyor passes through these openings and its downstream end projects outside. The transfer conveyor 9, for carrying the formed hydrated belt-like dough mixture 6'', is provided adjacent the end of the forming conveyor 5 and is driven by a motor (not shown).

Stretching means 10 is provided downstream of the transfer conveyor 9. The stretching means comprises a plurality of conveyors arranged in series, namely an intake conveyor 11, a middle conveyor 12, and an outlet conveyor 13, together with a group of rollers 14.

The rolls of conveyors 11, 12 and 13 are driven by respective motors (not shown) such that the speed of each of the plurality of conveyors is increased stepwise in the downstream direction, i.e. the direction of progress of the dough sheet. The rollers 14 are driven by a mechanism (not shown) such that each revolves while passing around an oblong path located above and along the conveyors 11, 12 and 13. The rollers 14 are driven by an assembly of bevel gears, sprockets, and chain belts. The lower straight part of the oblong path is spaced at a predetermined distance above the surface of the belts of the conveyors 11, 12 and 13, so that the dough mixture passing therebetween is compressed and stretched.

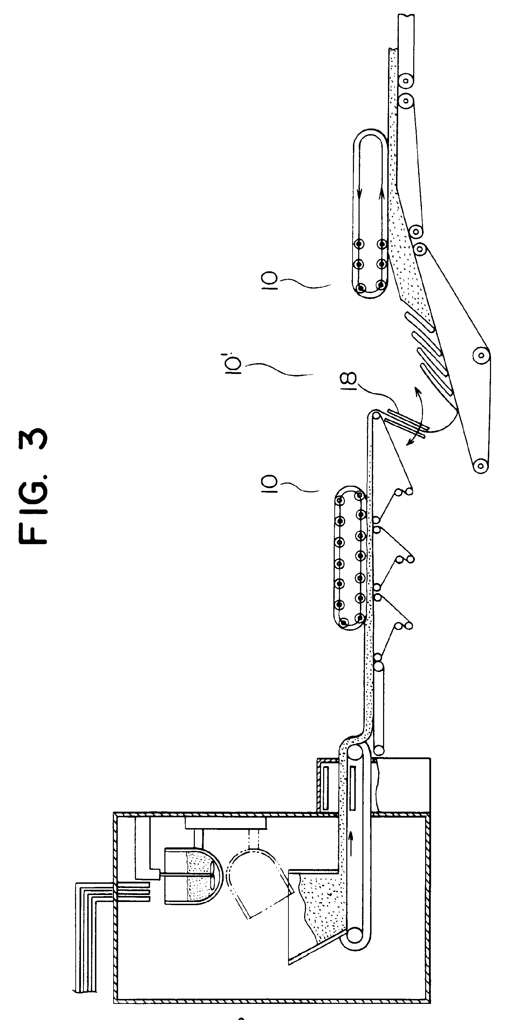

Fig. 3 shows a stretching station 10' of a second embodiment of this invention, which comprises a plurality of stretching means 10 and a folder 18. In the stretching station 10' a predetermined length of the stretched dough mixture is continuously folded by the folder 18, and then repeatedly stretched, so that a highly-elastic bread dough with a well-developed gluten is obtained. The folder 18 is disposed adjacent the previously mentioned outlet conveyor 13. It includes an oblong channel through which the dough sheet is passed. The channel is driven by a mechanism (not shown) so as to be moved in the forward and backward directions along the direction of movement of the bread dough, so that the dough discharged onto the next conveyor is folded as shown in the Figure. The folded dough is then stretched by the second stretching means 10 to again form a dough sheet.

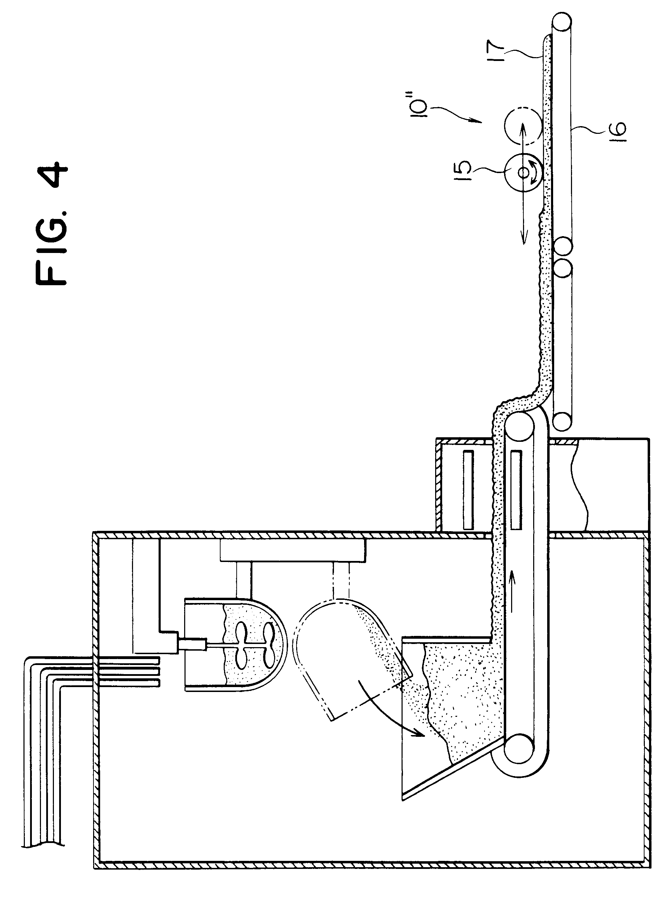

Fig. 4 shows a third embodiment of the invention, which employs another stretching means 10''. This stretching means 10'' comprises a roll 15 and a conveyor 16. The roll 15 reciprocates along a straight path spaced at a certain interval above the surface of the conveying belt of a conveyor 16, while rolling at a speed substantially synchronized with that of the conveyor 16. Thus the dough mixture on the conveyor 16 is stretched in the direction of movement of the dough mixture by the reciprocating movements of the roller 15.

The operation of the above described embodiments of the invention will now be explained. After the powdered materials, including flour and other materials, have been uniformly mixed with particles of ice in the mixing bowl 2, the mixing bowl is lowered and turned over to discharge the dough mixture 6 into the hopper 4. The dough mixture 6, formed into a belt-like shape by the forming conveyor 5, is then discharged from the outlet 41 of the hopper 4. Since the flexible walls 52 are provided on both sides of the forming conveyor 5, the belt-like dough mixture 6', in a powdery state, does not fall from the sides of the conveyor.

As the belt-like dough mixture 6' passes through the melting chamber 8, the particles of ice are thawed to make the belt-like dough mixture 6' hydrated, and the hydrated dough mixture 6'' then moves onto the transfer conveyor 9. The hydrated belt-like dough mixture 6'' is then stretched. In the first two embodiments its upper surface is pressed down by the rollers 14, and a shearing stress, which is generated by the differences in the speeds of the conveyors 11, 12 and 13, is exerted on it. This causes a shearing deformation in the tissue structure of the dough mixture so that a gluten network is generated. Further, when the rollers 14 move along the lower straight part of their oblong path, they strike the dough mixture and this also generates a gluten network.

The reciprocating roller 15 of the embodiment of Fig. 4 also has a stretching effect that generates a shearing deformation similar to that mentioned above. Namely, the rolling movements of the roller 15, whose speed is substantially synchronized with that of the conveyor 16, cause a shearing deformation to be generated during the movement of the dough mixture.

The following table shows the formulation ratios of raw materials, specifically the ingredients for French bread dough, in an embodiment of the invention:

### Ingredients (parts by weight)

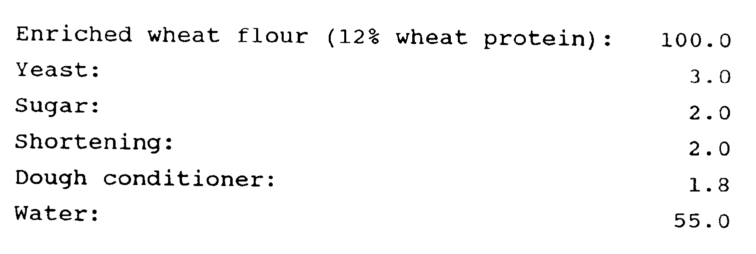

The following table shows the processing conditions of an embodiment of the invention:

### Processing conditions

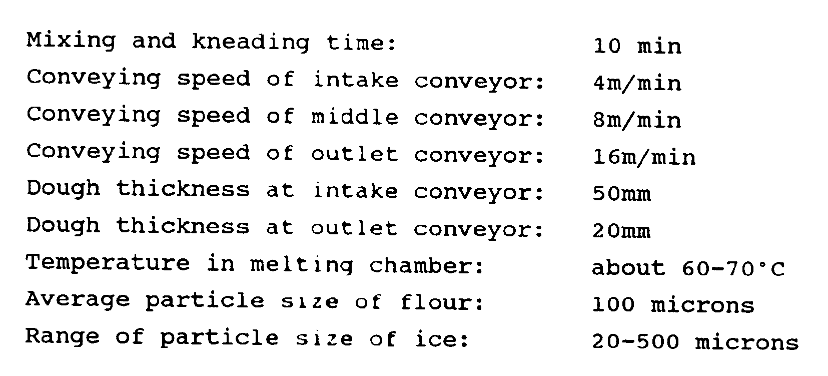

Although the embodiments of the invention have been described with reference to bread dough, they are also effective to manufacture other kinds of dough, e.g. for pastry, pizzas, or noodles.

It will thus be understood that the method and apparatus of this invention, at least in its preferred forms, eliminate the conventionally required kneading step, and enable the instant production of a sheet of dough of a high quality with a uniform width and thickness. Thus the efficiency of producing dough is greatly improved.

## Claims

1. A method of producing a sheet of dough, comprising the steps of:
mixing powdered materials, suitable for making dough, with particles of ice, such that the particles of ice do not melt, to make a dough mixture (6);
forming the dough mixture into a continuous belt-like dough mixture (6') having a substantially uniform width and thickness such that the particles of ice still do not melt;
melting the said particles of ice to make the belt-like dough mixture hydrated; and
stretching the continuous hydrated belt-like dough mixture (6'') to thereby make a continuous sheet of dough and to generate a gluten network in the dough sheet.

2. A method as claimed in claim 1, which further comprises the step of folding and then stretching the continuous dough sheet.

3. A method as claimed in claim 1 or 2, wherein the steps of mixing and forming are carried out at a temperature of below -10°C.

4. A method as claimed in any of claims 1 to 3, wherein the said powdered materials include flour, yeast, sugar, and fats and oils, for making bread dough.

5. A method as claimed in claim 4, wherein the said fats and oils are ground from solid fats and oils.

6. Apparatus for producing a sheet of dough, comprising:
mixing means (2,3) for mixing powdered materials, suitable for making dough, with particles of ice, to make a dough mixture;
forming means (5) for forming said dough mixture into a continuous belt-like dough mixture (6');
a freezing chamber (7) for holding the said mixing means and forming means in an environment such that the particles of ice do not melt;
a melting chamber (8) for melting the particles of ice, disposed adjacent and downstream of the said freezing chamber; and
a dough stretcher (10) disposed downstream of the melting chamber.

## Patentansprüche

1. Verfahren zum Herstellen einer Teigbahn, umfassend die Schritte des:
Mischens von pulverförmigen Materialien, die zum Herstellen von Teig geeignet sind, mit Eispartikeln derart, daß die Eispartikel nicht schmelzen, um ein Teiggemisch (6) herzustellen;
Formens des Teiggemisches zu einem kontinuierlichen bandartigen Teiggemisch (6'), welches im wesentlichen gleichmäßige Breite und Dicke hat, derart, daß die Eispartikel noch nicht schmelzen;
Schmelzens der Eispartikel, um das bandartige Teiggemisch wasserhaltig zu machen; und des
Streckens des kontinuierlichen hydratisierten bzw. wasserhaltigen bandartigen Teiggemischs (6''), um dadurch eine kontinuierliche Teigbahn herzustellen und ein Glutennetzwerk in der Teigbahn zu erzeugen.

2. Verfahren nach Anspruch 1, welches weiterhin den Schritt des Faltens und dann des Streckens der kontinuierlichen Teigbahn umfaßt.

3. Verfahren nach Anspruch 1 oder 2, wobei die Schritte des Mischens und Formens bei einer Temperatur von unter -10°C ausgeführt werden.

4. Verfahren nach irgendeinem der Ansprüche 1 bis 3, wobei die pulverförmigen Materialien Mehl, Hefe, Zucker und Fette und Öle umfassen für das Herstellen von Brotteig.

5. Verfahren nach Anspruch 4, wobei die genannten Fette und Öle von festen Fetten und Ölen erhalten sind.

6. Vorrichtung zum Herstellen einer Teigbahn, umfassend:
eine Mischeinrichtung (2, 3) zum Mischen pulverförmiger Materialien, die zum Herstellen von Teig geeignet sind, mit Eispartikeln, um ein Teiggemisch herzustellen;
eine Formungseinrichtung (5) zum Formen des Teiggemisches zu einem kontinuierlichen bandartigen Teiggemisch (6');
eine Gefrierkammer (7) zum Halten der Mischeinrichtung und der Formungseinrichtung in einer Umgebung derart, daß die Eispartikel nicht schmelzen;
eine Schmelzkammer (8) zum Schmelzen der Eispartikel, die nahe und stromabwärts der Gefrierkammer angeordnet ist; und
eine Teigstreckeinrichtung (10), die stromabwärts der Schmelzkammer angeordnet ist.

## Revendications

1. Procédé de production d'une feuille de pâte, comportant les étapes qui consistent :
à mélanger des matières en poudre, convenant à la production de pâte, avec des particules de glace, de manière que les particules de glace ne fondent pas, pour produire un mélange pour pâte (6) ;
à mettre le mélange pour pâte en forme d'un mélange pour pâte (6') analogue à une bande continue ayant une largeur et une épaisseur sensiblement uniformes, d'une manière telle que les particules de glace ne fondent toujours pas ;
à faire fondre lesdites particules de glace pour hydrater le mélange pour pâte analogue à une bande ; et
à étirer le mélange pour pâte hydraté (6'') analogue à une bande continue afin de produire une feuille continue de pâte et de générer un réseau de gluten dans la feuille de pâte.

2. Procédé selon la revendication 1, qui comprend en outre l'étape consistant à plier puis étirer la feuille de pâte continue.

3. Procédé selon la revendication 1 ou 2, dans lequel les étapes de mélange et de mise en forme sont exécutées à une température inférieure à -10°C.

4. Procédé selon l'une quelconque des revendications 1 à 3, dans lequel lesdites matières en poudre comprennent de la farine, de la levure, du sucre, des matières grasses et des huiles, pour produire de la pâte à pain.

5. Procédé selon la revendication 4, dans lequel lesdites matières grasses et les huiles sont obtenues par broyage de matières grasses et d'huiles solides.

6. Appareil pour produire une feuille de pâte, comportant :
des moyens de mélange (2, 3) pour mélanger des matières en poudre, convenant à la production de pâte, avec des particules de glace, afin de former un mélange pour pâte ;
des moyens (5) de mise en forme destinés à former ledit mélange pour pâte en un mélange pour pâte (6') analogue à une bande continue ;
une chambre (7) de congélation destinée à maintenir lesdits moyens de mélange et lesdits moyens de mise en forme dans un milieu ambiant tel que les particules de glace ne fondent pas ;
une chambre (8) de fusion destinée à faire fondre les particules de glace, disposée à proximité immédiate et en aval de ladite chambre de congélation ; et
un dispositif (10) d'étirage de pâte disposé en aval de la chambre de fusion.
